# EUROPEAN PATENT APPLICATION

(11) **EP 2 953 058 A1**
(43) Date of publication of application: **09.12.2015**
(21) Application number: 15170732.0
(22) Date of filing: 04.06.2015
(51) Int. Cl.: G06K 9/00, G06F 3/0484

(54) **METHOD FOR DISPLAYING IMAGES AND ELECTRONIC DEVICE FOR IMPLEMENTING THE SAME**

(30) Priority: 05.06.2014 KR 20140068110
(71) Applicant: Samsung Electronics Co., Ltd, Gyeonggi-do 443-742 (KR)
(72) Inventor: Jwa, Changhyup, 443-742 Gyeonggi-do (KR); Jeon, Bunam, 443-742 Gyeonggi-do (KR)
(74) Representative: Nederlandsch Octrooibureau

(57) **Abstract**

A method and an electronic device for displaying images are provided. The method includes displaying an electronic document including an image object, receiving an event with respect to the image object, adjusting, based on the received event, a size of an image displayed through the image object, and displaying the size-adjusted image.

## Description

### TECHNICAL FIELD

The present disclosure relates to a method for displaying images and an electronic device for implementing the same.

### BACKGROUND

Recently, electronic devices have been implemented as multimedia devices that adopt various functions, such as photographing photos, filming videos, reproducing music files or video files, gaming, receiving broadcasts, supporting the wireless Internet, and the like. With the development of the functions of the electronic devices, technologies to satisfy user demands and increase convenience have been developed in terms of hardware or software. For example, the user may log on to web pages, such as portal sites, blogs, shopping malls, and the like, using the wireless Internet, and may easily search for and browse various pieces of information.

Meanwhile, the electronic device downloads data, such as text or images, from the connected web page and processes the downloaded data to allow the user to easily browse the same. For example, the electronic device processes the downloaded text data or image data to be displayed adaptively in a screen of the electronic device. In addition, the electronic device provides a function of enlarging and reducing the size of the image displayed on the screen by the user.

According to the related art, the electronic device provides a function of enlarging or reducing the size of the entire image displayed on the screen regardless of text and images for enlargement or reduction thereof. In addition, according to the related art, in order to enlarge or reduce only the size of an image in the screen for displaying text and images, only the image is displayed in a new window, and then the displayed image is enlarged or reduced. The related art may be tiresome because it requires an operation of selecting an image, and an operation of enlarging or reducing the image displayed in a new window.

Therefore, a need exists for a method for displaying images, which supports the simple and easy adjustment of the size of the image in the screen for displaying electronic documents, and an electronic device for implementing the same.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method for displaying images, which supports the simple and easy adjustment of the size of the image in the screen for displaying electronic documents, and an electronic device for implementing the same.

In accordance with an aspect of the present disclosure, a method for displaying images of an electronic device is provided. The method includes displaying an electronic document including an image object, receiving an event with respect to the image object, adjusting, based on the received event, a size of an image displayed through the image object, and displaying the size-adjusted image.

In accordance with another aspect of the present disclosure, an electronic device is provided. The electronic device includes a display module configured to display an electronic document including an image object, a user input module that includes a touch panel configured to create an event with respect to the image object, and a processor configured to control the display module to adjust the size of an image displayed through the image object based on the received event, and to display the size-adjusted image.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device according to various embodiments of the present disclosure;
FIG. 2 is a flowchart illustrating a method of displaying images according to various embodiments of the present disclosure;
FIG. 3 is a flowchart of a method for displaying images according to an embodiment of the present disclosure;
FIGS. 4A and 4B illustrate a method for displaying images according to various embodiments of the present disclosure;
FIG. 5 is a flowchart illustrating a method for displaying images according to an embodiment of the present disclosure;
FIGS. 6A and 6B illustrate a method for displaying images according to various embodiments of the present disclosure;
FIG. 7 is a flowchart illustrating a method for displaying images according to an embodiment of the present disclosure;
FIGS. 8A and 8B illustrate a method for displaying images according to various embodiments of the present disclosure;
FIGS. 9A, 9B, and 9C illustrate a method for displaying images according to various embodiments of the present disclosure;
FIGS. 10A and 10B illustrate a method for displaying images according to various embodiments of the present disclosure; and
FIG. 11 is a block diagram of an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those or ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

As used in embodiments of the present disclosure, the expression "include" or "may include" or "can include" refers to the existence of a corresponding function, operation, or constituent element, and does not limit one or more additional functions, operations, or constituent elements. Further, as used in embodiments of the present disclosure, the term, such as "include" or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

As used in embodiments of the present disclosure, the expression "and/or" includes any or all combinations of words enumerated together. For example, the expression "A or B" or "at least one of A and B" may include A, may include B, or may include both A and B.

While expressions including ordinal numbers, such as "first" and "second", as used in embodiments of the present disclosure may modify various constituent elements, such constituent elements are not limited by the above expressions. For example, the above expressions do not limit the sequence and/or importance of the corresponding constituent elements. The above expressions may be used merely for the purpose of distinguishing a constituent element from other constituent elements. For example, a first user device and a second user device indicate different user devices although both are user devices. For example, a first constituent element may be termed a second constituent element, and likewise a second constituent element may also be termed a first constituent element without departing from the scope of the present disclosure.

When a component is referred to as being "connected" or "accessed" to any other component, it should be understood that the component may be directly connected or accessed to the other component, but another new component may also be interposed between them. Contrarily, when a component is referred to as being "directly connected" or "directly accessed" to any other component, it should be understood that there is no new component between the component and the other component.

Herein, the term "color-blind" is used to refer to a person with any color-vision-deficiency. Herein, "correcting" a color-blind condition or like phrase refers to improving the ability of the person to see a colored object or to distinguish between objects of different colors.

In various embodiments of the present disclosure, an electronic device may be a device that involves a communication function. For example, an electronic device may be a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), a Moving Picture Experts Group (MPEG-1 or MPEG-2) Audio Layer 3 (MP3) player, a portable medical device, a digital camera, or a wearable device (e.g., a Head-Mounted Device (HMD), such as electronic glasses, electronic clothes, an electronic bracelet, an electronic necklace, electronic tattoos, an electronic appcessory, a smart watch, and the like).

According to various embodiments of the present disclosure, an electronic device may be a smart home appliance that involves a communication function. For example, an electronic device may be a Television (TV), a Digital Versatile Disc (DVD) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, and the like), a game console, an electronic dictionary, an electronic key, a camcorder, an electronic picture frame, and the like.

According to various embodiments of the present disclosure, an electronic device may be a medical device (e.g., Magnetic Resonance Angiography (MRA), Magnetic Resonance Imaging (MRI), Computed Tomography (CT), ultrasonography, and the like), a navigation device, a Global Positioning System (GPS) receiver, an Event Data Recorder (EDR), a Flight Data Recorder (FDR), a car infotainment device, electronic equipment for ship (e.g., a marine navigation system, a gyrocompass, and the like), avionics, security equipment, or an industrial or home robot, robot, an automatic teller machine of financial institutions, or point of sales of stores.

According to various embodiments of the present disclosure, an electronic device may be furniture or part of a building or construction having a communication function, an electronic board, an electronic signature receiving device, a projector, or various measuring instruments (e.g., a water meter, an electric meter, a gas meter, a wave meter, and the like). An electronic device disclosed herein may be one of the above-mentioned devices or any combination thereof. Further, the electronic device according to embodiments of the present disclosure may be a flexible device. It is noted that the above-mentioned electronic devices are not to be considered as a limitation of the various embodiments of the present disclosure.

Hereinafter, an electronic device according to various embodiments of the present disclosure will be discussed with reference to the accompanying drawings. The term "a user" as used in various embodiments of the present disclosure may refer to any person who uses an electronic device or any other device (e.g., an artificial intelligence electronic device) using an electronic device.

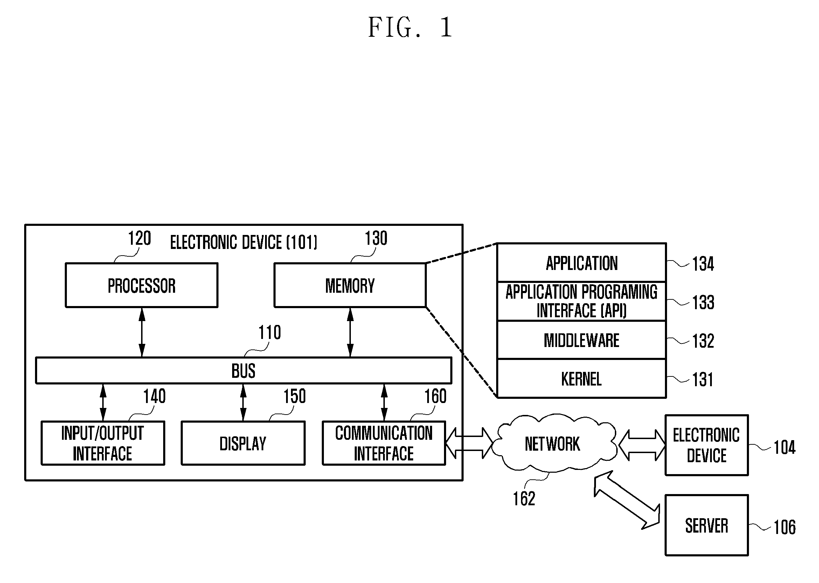

FIG. 1 is a block diagram of an electronic device according to an embodiment of the present disclosure.

Referring to FIG. 1, an electronic device 101 may include, but not limited to, a bus 110, a processor 120, a memory 130, an input/output interface 140, a display 150, and a communication interface 160.

The bus 110 may be a circuit designed for connecting the above-discussed elements and communicating data (e.g., a control message) between such elements.

The processor 120 may receive commands from the other elements (e.g., the memory 130, the input/output interface 140, the display 150, the communication interface 160, or the application control module 170, and the like) through the bus 110, interpret the received commands, and perform the arithmetic or data processing based on the interpreted commands.

The memory 130 may store therein commands or data received from or created at the processor 120 or other elements (e.g., the input/output interface 140, the display 150, the communication interface 160, or the application control module 170, and the like). The memory 130 may include programming modules, such as a kernel 131, a middleware 132, an application programming interface (API) 133, and an application 134. Each of the programming modules may include software, firmware, hardware, and any combination thereof.

The kernel 131 may control or manage system resources (e.g., the bus 110, the processor 120, or the memory 130, and the like) used for performing operations or functions of the other programming modules, e.g., the middleware 132, the API 133, or the application 134. Additionally, the kernel 131 may offer an interface that allows the middleware 132, the API 133 or the application 134 to access, control or manage individual elements of the electronic device 101.

The middleware 132 may perform intermediation by which the API 133 or the application 134 communicates with the kernel 131 to transmit or receive data. Additionally, in connection with task requests received from the applications 134, the middleware 132 may perform a control (e.g., scheduling or load balancing) for the task request by using technique, such as assigning the priority for using a system resource of the electronic device 101 (e.g., the bus 110, the processor 120, or the memory 130, and the like) to at least one of the applications 134.

The API 133, which is an interface for allowing the application 134 to control a function provided by the kernel 131 or the middleware 132, may include, for example, at least one interface or function (e.g., a command) for a file control, a window control, an image processing, a text control, and the like.

According to various embodiments of the present disclosure, the application 134 may include a Short Message Service (SMS)/a Multimedia Message Service (MMS) application, an email application, a calendar application, an alarm application, a health care application (e.g., an application for measuring quantity of motion or blood sugar), an environment information application (e.g., an application for offering information about atmospheric pressure, humidity, or temperature), and the like. Additionally or alternatively, the application 134 may be an application associated with an exchange of information between the electronic device 101 and any external electronic device (e.g., an external electronic device 104). This type of application may include a notification relay application for delivering specific information to an external electronic device, or a device management application for managing an external electronic device.

For example, the notification relay application may include a function to deliver notification information created at any other application of the electronic device 101 (e.g., the SMS/MMS application, the email application, the health care application, or the environment information application, and the like) to an external electronic device (e.g., the other electronic device 104). Additionally or alternatively, the notification relay application may receive notification information from an external electronic device and offer the notification information to a user. The device management application may manage (e.g., install, remove or update) a certain function (i.e., a turn-on/turn-off of an external electronic device (or some components thereof), or an adjustment of brightness (or resolution) of a display) of any external electronic device communicating with the electronic device 101, a certain application operating at such an external electronic device, or a certain service (e.g., a call service or a message service) offered by such an external electronic device.

According to various embodiments of the present disclosure, the application 134 may include a specific application specified depending on attributes (e.g., a type) of an external electronic device (e.g., the other electronic device 104). For example, in case an external electronic device is an MP3 player, the application 134 may include a specific application associated with the play of music. Similarly, in case an external electronic device is a portable medical device, the application 134 may include a specific application associated with health care. In an embodiment of the present disclosure, the application 134 may include at least one of an application assigned to the electronic device 101 or an application received from an external electronic device (e.g., a server 106 or the other electronic device 104).

The input/output interface 140 may deliver commands or data, entered by a user through an input/output unit (e.g., a sensor, a keyboard, a touch screen, and the like), to the processor 120, the memory 130, the communication interface 160, or the application control module 170 via the bus 110. For example, the input/output interface 140 may offer data about a user's touch, entered through the touch screen, to the processor 120. In addition, through the input/output unit (e.g., a speaker or a display), the input/output interface 140 may output commands or data, received from the processor 120, the memory 130, the communication interface 160, or the application control module 170 via the bus 110. For example, the input/output interface 140 may output voice data, processed through the processor 120, to a user through the speaker.

The display 150 may display thereon various types of information (e.g., multimedia data, text data, and the like) to a user.

The communication interface 160 may perform a communication between the electronic device 101 and any external electronic device (e.g., the other electronic device 104 of the server 106). For example, the communication interface 160 may communicate with any external device by being connected with a network 162 through a wired or wireless communication. A wireless communication may include, but is not limited to, at least one of Wi-Fi, Bluetooth (BT), Near Field Communication (NFC), GPS, or a cellular communication (e.g., Long Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro), or Global System for Mobile communications (GSM), and the like). A wired communication may include, but is not limited to, at least one of Universal Serial Bus (USB), High Definition Multimedia Interface (HDMI), Recommended Standard 232 (RS-232), or Plain Old Telephone Service (POTS).

According to an embodiment of the present disclosure, the network 162 may be a communication network, which may include at least one of a computer network, an Internet, an Internet of things, or a telephone network. According to an embodiment of the present disclosure, a protocol (e.g., a transport layer protocol, a data link layer protocol, or a physical layer protocol) for a communication between the electronic device 101 and any external device may be supported by at least one of the application 134, the API 133, the middleware 132, the kernel 131, or the communication interface 160.

According to an embodiment of the present disclosure, the server 106 may be supported by performing at least one operation among the operations (or functions) obtained from the electronic device 101.

According to an embodiment of the present disclosure, an electronic device may comprise a display module configured to display an electronic document including an image object, a user input module that includes a touch panel configured to create an event with respect to the image object, and a processor configured to control the display module to adjust the size of an image displayed through the image object based on the received event, and to display the size-adjusted image.

According to an embodiment of the present disclosure, the processor may control the display module to display a specifying object for adjusting the size of the image on the image object.

According to an embodiment of the present disclosure, the processor may make a control to enlarge or reduce the size of the image based on a central point of the image object.

According to an embodiment of the present disclosure, the touch panel may create an event according to a pinch-zoom gesture, and the processor makes a control to enlarge or reduce the size of the image based on the event according to the pinch-zoom gesture.

According to an embodiment of the present disclosure, the processor may make a control to enlarge or reduce the size of the image based on a point where the event is received on the image object.

According to an embodiment of the present disclosure, the processor may detect at least one face in the image displayed through the image object, and the touch panel creates an event with respect to at least one area where the face is detected.

According to an embodiment of the present disclosure, the processor may make a control to enlarge or reduce the image based on at least one area where the face is detected.

According to an embodiment of the present disclosure, the processor may adjust the size of the image into the size of an original image or at a certain ratio.

According to an embodiment of the present disclosure, the user input module may receive an event for restoring the size-adjusted image to the original status, in which the size of the image is not adjusted, and if the processor identifies that the event for restoring the image to the original status has been received, the processor restores the size-adjusted image to the original status, in which the size of the image is not adjusted.

According to an embodiment of the present disclosure, the user input module may receive an event for moving the image displayed through the image object, and if the processor identifies that the event for moving the image has been received, the processor moves the image based on the event.

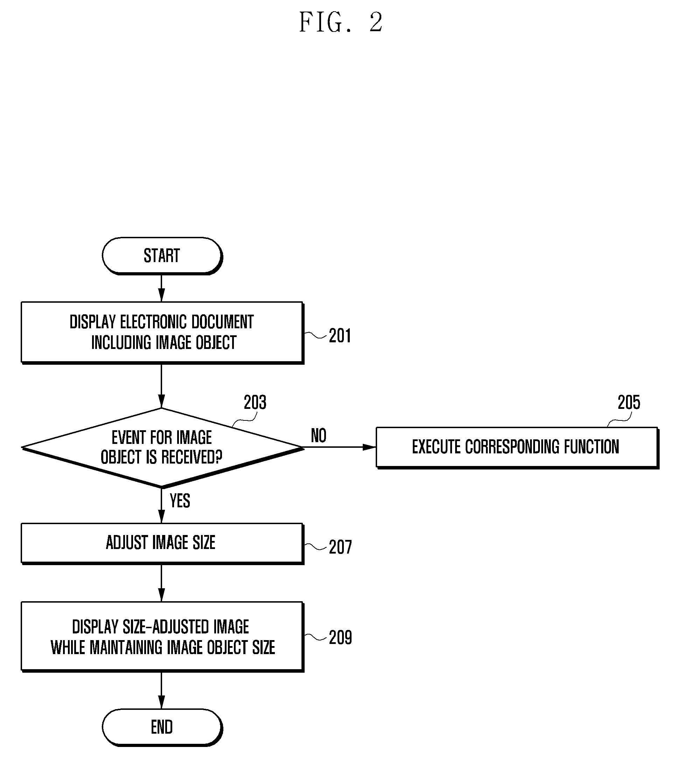

FIG. 2 is a flowchart illustrating a method of displaying images according to various embodiments of the present disclosure.

Referring to FIG. 2, in operation 201, the processor 120 may display an electronic document including an image object. According to an embodiment of the present disclosure, when the electronic device logs on to the electronic document, e.g., a uniform resource locator (URL) where the web page is located, the processor 120 may control the communication module 160 to download a source code constituting the web page or image data from the server. The processor 120 may make a control to display a web page image adaptively based on the downloaded image data or the web page source code. For example, the processor 120 may control the display 150 to adjust the size of the text by parsing the downloaded web page source code, or to display an image object of which the size has been adjusted based on the downloaded image data. For example, in order to display a size-adjusted image object, the processor 120 may control the display 150 to display the image object suitable for the size of a screen of the electronic device (e.g., a horizontal length or a vertical length of the display 150 of the electronic device), based on at least one of a horizontal length or a vertical length of the downloaded image, i.e., the original image, (e.g., the number of horizontal pixels of the original image, or the number of vertical pixels thereof). Here, the downloaded web page source code and image data may be stored in a temporary file, and then may be deleted in a specific amount of time. However, the present disclosure is not limited thereto, and the downloaded web page source code and image data may be maintained to be stored until the user deletes the same.

According to an embodiment of the present disclosure, in operation 203, the processor 120 may identify whether an event with respect to the image object is received. In various embodiments of the present disclosure, when the user makes at least one input of a gesture with respect to the image object or a specifying object overlapping or overlaying the image object, a gesture of a pinch-zoom with respect to the image object, or a gesture with respect to an image area where a face is recognized, the processor 120 may receive the events corresponding to the gestures, which are created in the touch panel.

According to an embodiment of the present disclosure, when the event with respect to the image object is not received in operation 203, the processor 120 may make a control to execute a corresponding function in operation 205. For example, when an event that is created by a touch gesture for a specific amount of time with respect to text (e.g., a long-touch gesture) is received, the processor 120 may make a control to execute a function of selecting the touched text, or to display a menu. However, this is only an example, and the scope of the present disclosure is not limited thereto.

According to an embodiment of the present disclosure, if the processor 120 identifies the reception of the event with respect to the image object in operation 203, the processor 120 may adjust the size of the image that is displayed through the image object in operation 207. For example, the processor 120 may control the display 150 to enlarge or reduce the currently displayed image into an original image size or a certain image size, and to display the same. In addition, the processor 120 may make a control to enlarge or reduce the image based on a central point of the image object, a point where the pinch-zoom is received, or a face recognition point, according to the received event.

According to an embodiment of the present disclosure, in operation 209, the processor 120 may control the display 150 to display the size-adjusted image while maintaining the size of the image object. For example, the processor 120 may control the display 150 to display the enlarged or reduced image through the image object while the sizes of the text and the image object are maintained in the web page.

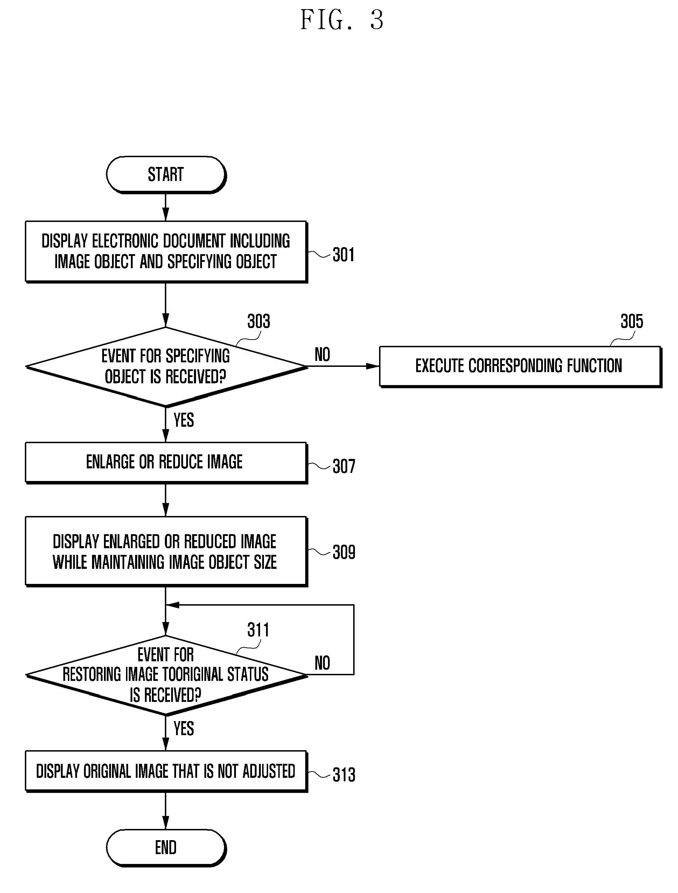

FIG. 3 is a flowchart of a method for displaying images according to an embodiment of the present disclosure. The description that has been made in FIG. 2 above will be omitted in FIG. 3 for clarity of the technical concept of the present disclosure.

Referring to FIG. 3, the processor 120 may display an electronic document including the image object and the specifying object in operation 301. Here, the specifying object may be defined as an image, such as an icon (or an item), which is mapped with a function of enlarging or reducing the images according to an embodiment of the present disclosure. According to an embodiment of the present disclosure, the specifying object may be displayed to overlap, or overlay, a layer of the image object. The specifying object may be implemented in various forms, such as a magnifying glass or images of "+/-."

According to an embodiment of the present disclosure, although the processor 120 is described to make a control to display the image object and the specifying object in the case of downloading the image data or the source code from the server that provides web pages in operation 301, the present disclosure is not limited thereto. For example, the processor 120 may receive an input for displaying the specifying object from the user while displaying the image object, and then may control the display 150 to display the specifying object. For example, the processor 120 may display the specifying object according to a touch input with respect to the image object while the image object is displayed. According to an embodiment of the present disclosure, the processor 120 may make a control such that the specifying object disappears in a certain amount of time.

According to an embodiment of the present disclosure, in operation 303, the processor 120 may identify whether an event with respect to the specifying object is received. For example, when the user touches the specifying object displayed on the image object, the processor 120 may recognize that an event with respect to the specifying object has been received.

According to an embodiment of the present disclosure, if the processor 120 identifies that an event with respect to the specifying object has not been received in operation 303, the processor 120 may execute a corresponding function in operation 305. For example, if the user touches the image object area rather than the specifying object area, the processor 120 may make a control to display the image object through a new window, or to execute another function related to the image object (e.g., a function of storing the image object, or a function of copying a URL where the image object is stored).

According to an embodiment of the present disclosure, in operation 307, the processor 120 may make a control to enlarge or reduce the size of the image displayed through the image object. According to an embodiment of the present disclosure, the processor 120 may identify the size of the downloaded image, i.e., the original image (e.g., the size of the image received from a web page providing server or a separate image providing server), and may enlarge and reduce the size of the image into the size of the original image. In an embodiment of the present disclosure, the processor 120 may enlarge or reduce the image at a certain ratio. For example, the processor 120 may enlarge the image at a ratio of 1.25, 1.75, 2, or 2.5, which are only examples, and the present disclosure is not limited thereto.

According to an embodiment of the present disclosure, the processor 120 may enlarge or reduce the image for the number of times of receiving the events with respect to the specifying object. For example, when events with respect to the specifying object are received twice, the processor 120 may make a control to enlarge the image according thereto.

In addition, when the event with respect to the specifying object is received in an embodiment of the present disclosure, the processor 120 may make a control to enlarge or reduce the image based on a central point of the image object. However, this is only an example, and the present disclosure is not limited thereto. According to an embodiment of the present disclosure, when another event with respect to another image object area rather than the specifying object is received, the processor 120 may enlarge or reduce the image based on a point where the touch has been made.

According to an embodiment of the present disclosure, in operation 309, the processor 120 may control the display 150 to display the enlarged or reduced image while the size of the image object is maintained. For example, in the case where the image is enlarged, the processor 120 may control the display 150 to display the enlarged image portion in the size of the image object based on the enlarged point of the image.

According to an embodiment of the present disclosure, in operation 311, the processor 120 may identify whether an event for restoring the enlarged or reduced image to the original status (e.g., the size of the image before being enlarged or reduced) is received. According to an embodiment of the present disclosure, if events more than a certain number of times are received with respect to the specifying object, the processor 120 may make a control to restore the enlarged or reduced image to the original status in operation 313. For example, in the case where the specifying object is preliminarily defined such that the specifying object can be enlarged three times based on the central point of the image object, when a fourth event with respect to the specifying object is received, the processor 120 may control the display 150 to display the original image of the specifying object.

Alternatively, in an embodiment of the present disclosure, the processor 120 may control the display 150 to display the original image of the enlarged or reduced image when specific keys are input.

According to an embodiment of the present disclosure, when the processor 120 identifies that the event for restoring the enlarged or reduced image to the original status has been received, the processor 120 may control the display 150 to display the image in the original size that has not been adjusted.

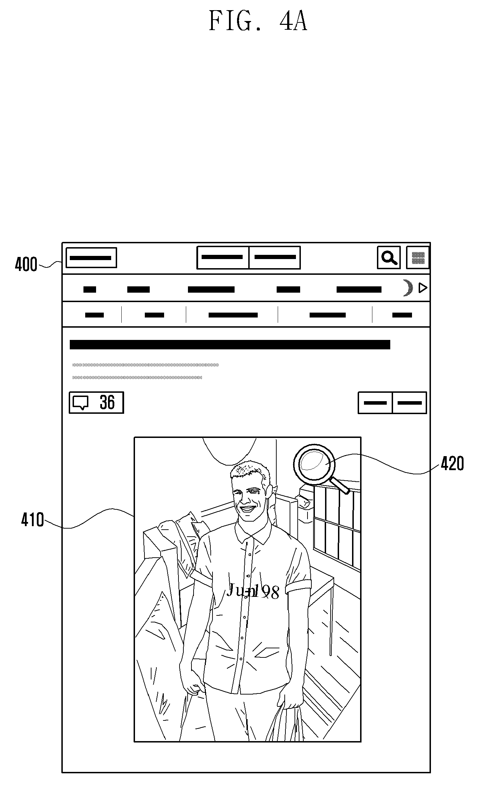

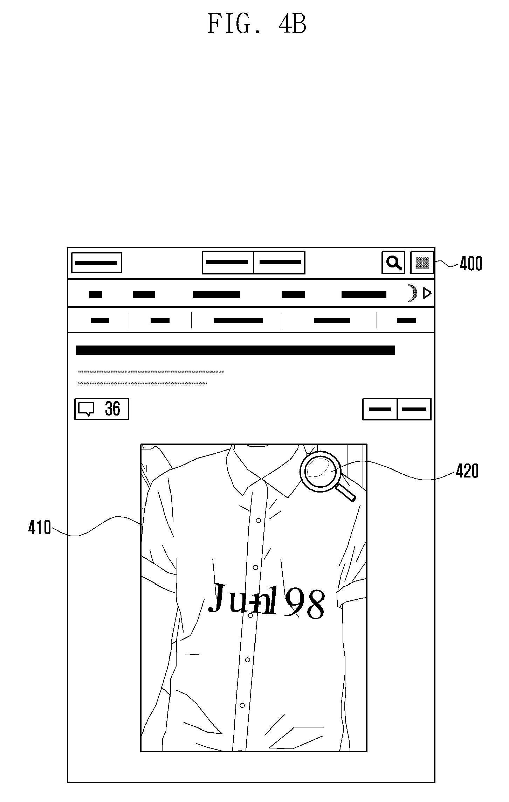

FIGS. 4A and 4B illustrate a method for displaying images according to various embodiments of the present disclosure.

Referring to FIG. 4A, a reference numeral 400 denotes a web page image according to an embodiment of the present disclosure. When the user enters a web page address, the web page image 400 may display an image object 410 and a specifying object 420 as shown in FIG. 4A. According to an embodiment of the present disclosure, the processor 120 may compare the size of the image object 410 displayed in the web page image 400 with the size of the original image, and may make a control to display the specifying object 420 only when the size of the original image is greater than the image object 410. However, the present disclosure is not limited thereto, and processor 120 may make a control to display the specifying object 420 when the size of the original image is equal to or less than the size of the image object 410 as well. In an embodiment of the present disclosure, when the user touches the image object 410 while the web page image 400 displays the image object 410, the processor 120 may control the display 150 to display the specifying object 420. According to an embodiment of the present disclosure, if no user input with respect to the specifying object 420 is received within a specific amount of time, the processor 120 may make a control such that the specifying object 420 disappears.

Referring to FIG. 4B, a web page image 400 illustrates when the user touches the specifying object 420. More specifically, when an event with respect to the specifying object 420 is received, the processor 120 may control the display 150 to enlarge the image displayed through the image object 410 into the size of the original image (e.g., the image downloaded from the web page providing server) based on the central point of the image object 410. However, this is only an example, and the scope of the present disclosure is not limited thereto. For example, the processor 120 may make a control to enlarge or reduce the image at a certain ratio rather than the size of the original image. In addition, the processor 120 may make a control to maintain the size of the image object 410 as shown in FIG. 4B.

According to an embodiment of the present disclosure, although the specifying object 420 is illustrated as a magnifying glass, and if the event with respect to the specifying object is received, the processor 120 enlarges the image in FIGS. 4A and 4B, these are only examples. According to various embodiments of the present disclosure, the specifying object may be display as various signs (or icons). For example, the specifying object may be display as signs of "+," or "-." In this case, if the user touches the sign of "+", the image may be enlarged, and if the user touches the sign of "-", the image may be reduced.

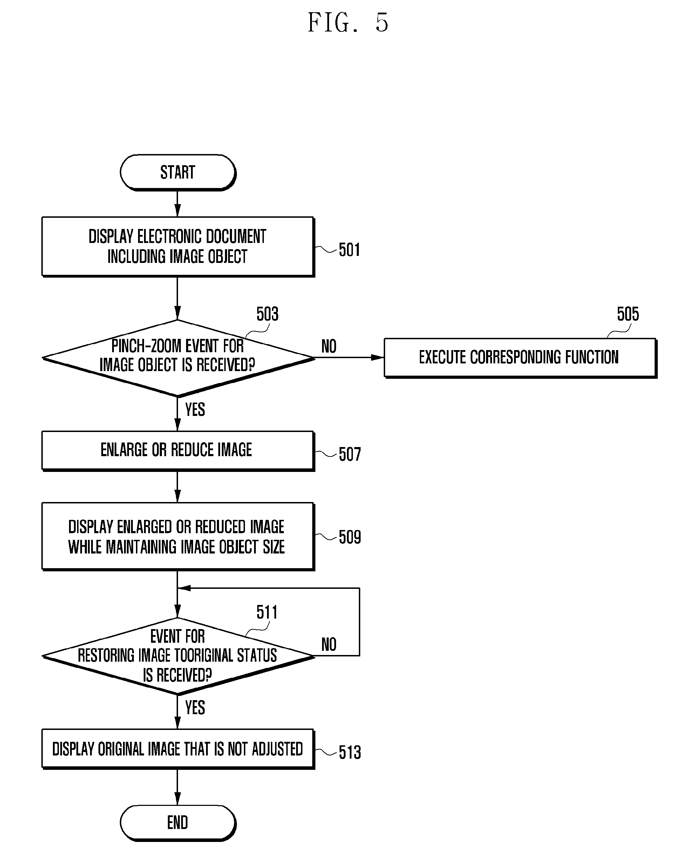

FIG. 5 is a flowchart illustrating a method for displaying images according to an embodiment of the present disclosure. The description that has been made in FIGS. 2 to 4B will be omitted in FIG. 5 for clarity of the technical concept of the present disclosure.

Referring to FIG. 5, the processor 120 may make a control to display an electronic document, e.g., a web page, including the image object in operation 501. In operation 503, the processor 120 may identify whether an event (e.g., a pinch-zoom or a volume key) for enlarging or reducing the image object is received. For example, the pinch-zoom may be defined as a gesture in which the user touches the screen with at least two fingers and moves at least one finger far from or toward the other fingers while the touches of the fingers on the screen are maintained. In addition, in separating the pinch-zoom operation, a pinch-zoom-in may be defined as a gesture in which at least one finger of two or more fingers, which have touched the screen, moves far from the other fingers, and a pinch-zoom-out may be defined as a gesture in which at least one finger moves toward the other fingers. According to an embodiment of the present disclosure, when the user touches the screen with two or more fingers as the pinch-zoom gesture, the processor 120 may recognize that a pinch-zoom event with respect to the image object has been received.

According to an embodiment of the present disclosure, if a pinch-zoom event, or an event created by a touch of two or more fingers with respect to the image object, is not received in operation 503, the processor 120 may make a control to execute a corresponding function in operation 505. For example, when a long-touch event is received with respect to the image object, the processor 120 may make a control to display the image object through a new window.

According to an embodiment of the present disclosure, in operation 507, the processor 120 may enlarge or reduce the size of the image displayed through the image object, based on the received pinch-zoom event. For example, when the event of the pinch-zoom-in with respect to the image object is received, the processor 120 may enlarge the image displayed through the image object based on two points those are touched by the fingers. In addition, when the event of the pinch-zoom-out with respect to the image object is received, the processor 120 may make a control to reduce the image displayed through the image object based on two points that are touched by the fingers.

According to an embodiment of the present disclosure, in operation 509, the processor 120 may control the display 150 to display the enlarged or reduced image while the size of the image object is maintained. In operation 511, the processor 120 may identify whether an event for restoring the image enlarged or reduced in operation 509 to the original status (e.g., the size of the image before being enlarged or reduced) is received. In addition, when the processor 120 recognizes that the event for restoring the enlarged or reduced image to the original status has been received in operation 511, the processor 120 may control the display 150 to display the image in the original size that has not been adjusted in operation 513.

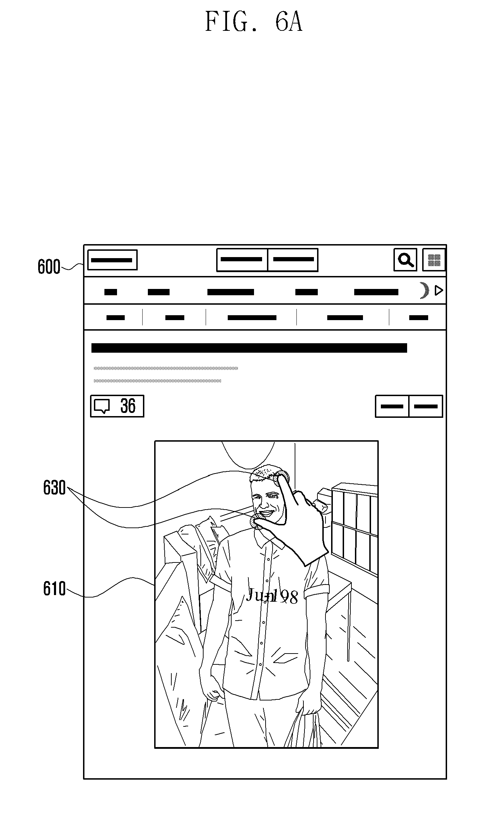

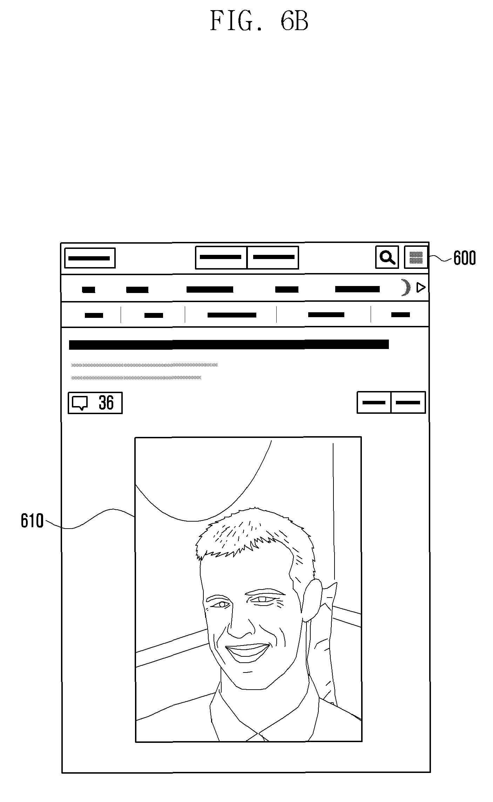

FIGS. 6A and 6B illustrate a method for displaying images according to various embodiments of the present disclosure.

Referring to FIG. 6A, a web page image 600 according to an embodiment of the present disclosure is illustrated. The user may make a pinch-zoom input with respect to two points on an image object 610. FIG. 6B illustrates the displayed image 600 in the case of an input of the pinch-zoom-in by the user.

Referring to FIG. 6B, the processor 120 may make a control to enlarge the image displayed through the image object 610 based on two points 630 on the image object 610, where the input of the pinch-zoom-in is made, and to display the same while the size of the image object 610 is maintained. Although it is not shown in FIGS. 6A and 6B, according to an embodiment of the present disclosure, when the user makes a pinch-zoom-out input, the processor 120 may make a control to reduce and display the image based on the points where the input of the pinch-zoom-out is made.

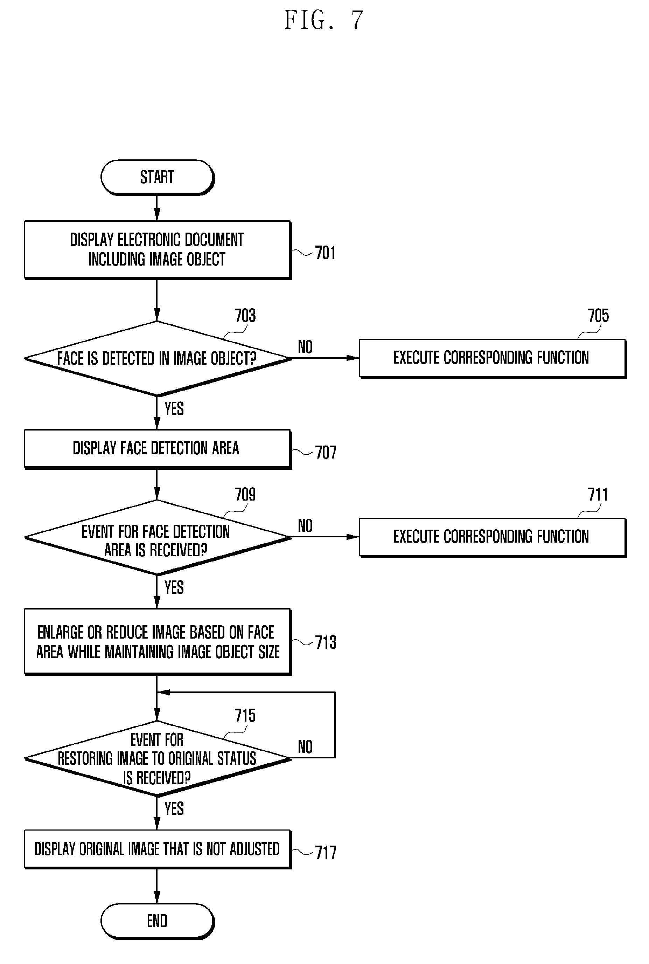

FIG. 7 is a flowchart illustrating a method for displaying images according to an embodiment of the present disclosure. The description that has been made in FIGS. 2 to 6B will be omitted in FIG. 7 for clarity of the technical concept of the present disclosure.

Referring to FIG. 7, in operation 701, the processor 120 may control the display 150 to display the electronic document, e.g., a web page, including the image object.

According to an embodiment of the present disclosure, in operation 703, the processor 120 may identify whether a face is detected in the image displayed through the image object. For example, the processor 120 may receive data on the face detected in the image using a face recognition program. The face recognition program may detect a face in the image, based on features, such as a face shape including eyes, a nose, a mouth, and the like. In addition, the face recognition program may detect each of a plurality of faces. Therefore, the processor 120 may recognize the detection of a face in the image and the data on the face-detected area. According to an embodiment of the present disclosure, the operation of detecting a face in the image may be configured in a specific mode in which the operation of detecting a face is automatically executed when the electronic document including image is displayed. Alternatively, the processor 120 may identify the detection of a face in the image by receiving a certain user input while the electronic document including the image is displayed.

According to an embodiment of the present disclosure, if a face is not detected in the image in operation 703, the processor 120 may execute a corresponding function in operation 705. For example, the image displayed through the image object relates to things, the processor 120 may make a control to perform a function according to the embodiments of FIGS. 2 to 6B.

According to an embodiment of the present disclosure, in operation 707, the processor 120 may control the display 150 to display a face detection area. For example, the processor 120 may highlight the edge of the face detection area or may have the face detection area shaded in order to separate face detection area from other image display areas. In addition, in the case of a plurality of face detection areas corresponding to a plurality of faces, the processor 120 may control the display 150 to display each of the face detection areas.

According to an embodiment of the present disclosure, in operation 709, the processor 120 may identify whether an event with respect to the face detection area is received. For example, when the user touches the face detection area, the processor 120 may receive an event created in the touch panel 252.

According to an embodiment of the present disclosure, if no event is received with respect to the face detection area in operation 709, the processor 120 may make a control to a corresponding function in operation 711. For example, when the event of a pinch-zoom input with respect to the image display area rather than the face detection area is received, the processor 120 may control the display 150 to enlarge or reduce the size of the image according to the pinch-zoom input.

According to an embodiment of the present disclosure, in operation 713, the processor 120 may control the display 150 to enlarge or reduce the image and display the same based on the face detection area, while the size of the image object is maintained. More specifically, when the event with respect to the face detection area is received in operation 709, the processor 120 may control the display 150 to enlarge or reduce the image based on the face detection area to be thereby displayed. For example, in the case of a plurality of face detection areas, when an event with respect to any one of the plurality of face detection areas is received, the processor 120 may control the display 150 to enlarge or reduce the image based on the face detection area where the event has been received, to be thereby displayed,.

Meanwhile, although it is not shown in FIG. 7, in the case of a single face detection area, when an event with respect to the specifying object for enlarging or reducing the image, as well as the face detection area, is received, the processor 120 may make a control to enlarge or reduce the image based on the face detection area.

According to an embodiment of the present disclosure, in operation 715, the processor 120 may identify whether an event for restoring the enlarged or reduced image to the original status (e.g., the size of the image before being enlarged or reduced) is received. When the processor 120 recognizes that the event for restoring the enlarged or reduced image to the original status has been received, the processor 120 may control the display 150 to display the image in the original size that has not been adjusted, in operation 717.

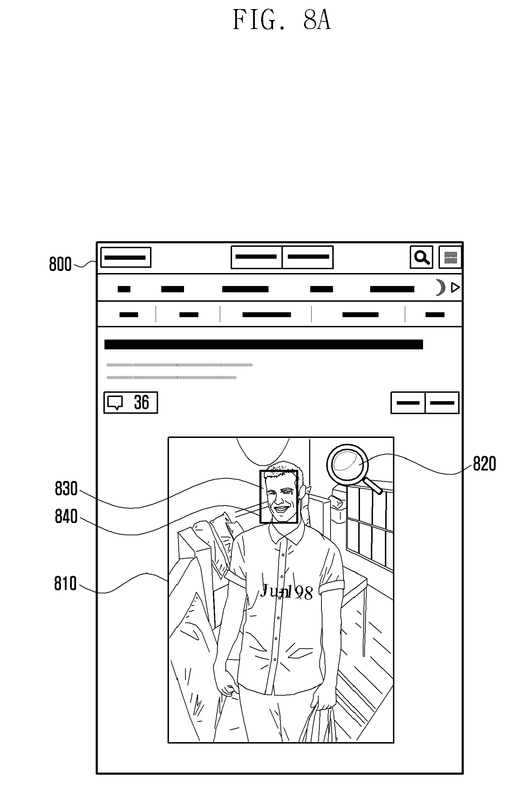

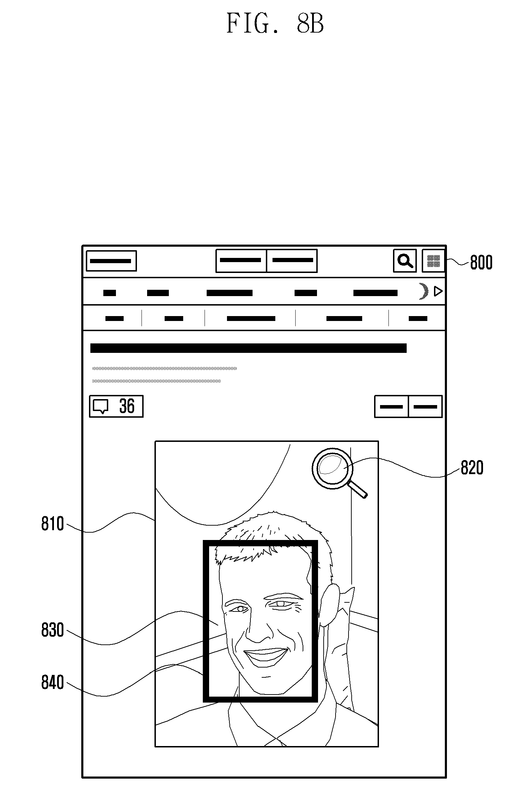

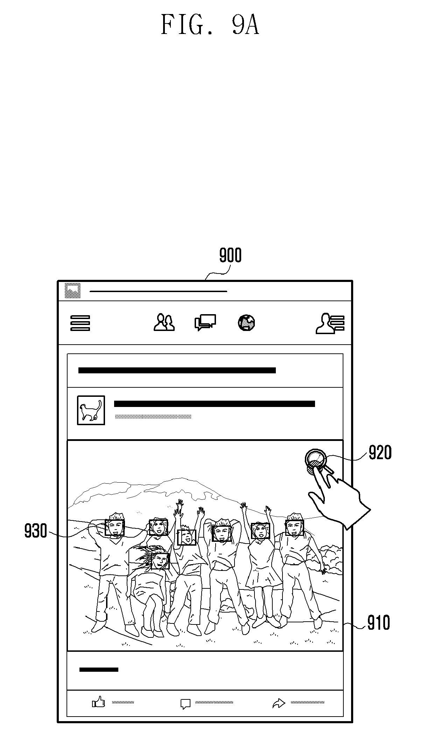

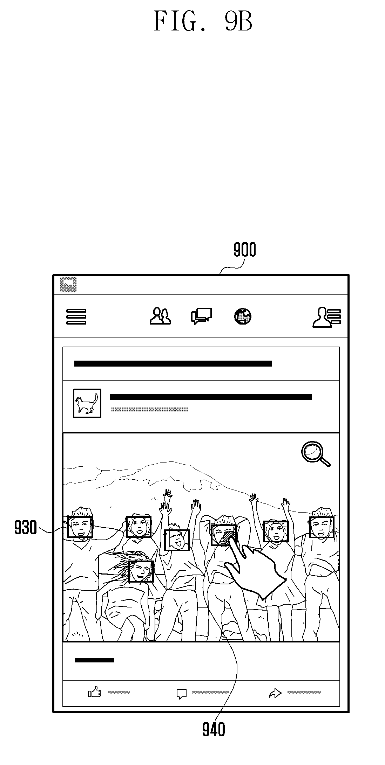

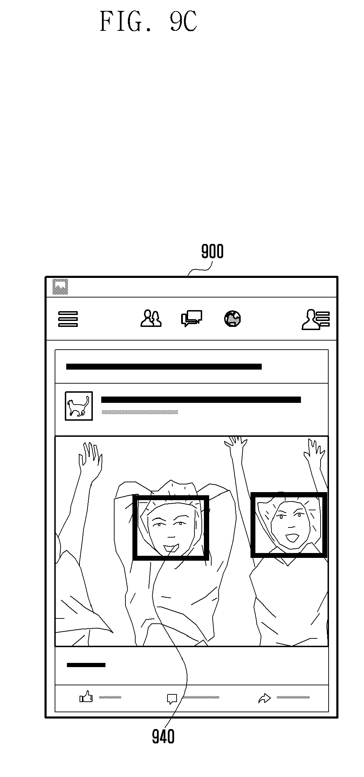

FIGS. 8A, 8B, 9A, 9B, and 9C illustrate a method for displaying images according to various embodiments of the present disclosure.

Referring to FIGS. 8A, 8B, 9A, 9B, and 9C, FIGS. 8A and 8B illustrate a web page image 800 in which a single face is detected according to an embodiment of the present disclosure. The image 800 of FIG. 8A illustrates an image object 810 that included a face detection area 830, a highlighted marking 840 for the face detection area, and a specifying object 820. In an embodiment of the present disclosure, when the user touches the face detection area 830, the processor 120 may control the display 150 to display the image 800 of FIG. 8B. The image 800 of FIG. 8B illustrates an image that is enlarged based on the face detection area 830. In an embodiment of the present disclosure, when the user touches the specifying object 820, the processor 120 may control the display 150 to display the image enlarged based on the face detection area 830 as well. According to an embodiment of the present disclosure, in the case of detecting a face in the image 800 of FIG. 8A, when an event for enlarging or reducing the image (e.g., the pinch-zoom, or the volume key) is received in the area rather than the face detection area in the image 800 of FIG. 8A, the processor 120 may make a control to display the image enlarged based on the face detection area 830 as shown in the image 800 of FIG. 8B.

FIG. 9A illustrates a web page image 900 that displays a plurality of face detection areas 930 according to detection of a plurality of faces.

Referring to FIG. 9A, when the user touches a specifying object 920, the processor 120 may control the display 150 to display the image enlarged based on the central point of an image object 910, as shown in FIG. 9B. FIG. 9C illustrates the image 900 displayed when the user touches one of the plurality of face detection areas 930. For example, in FIG. 9C, the processor 120 may control the display 150 to display the image enlarged based on a touched face detection area 940.

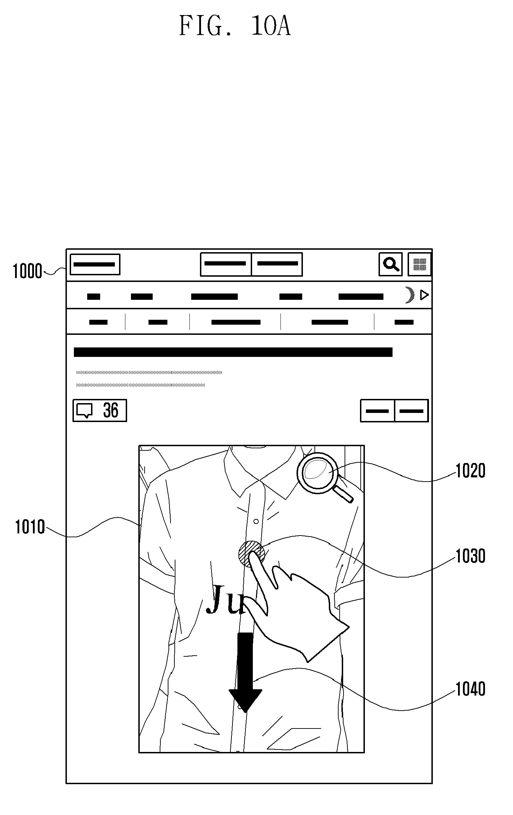

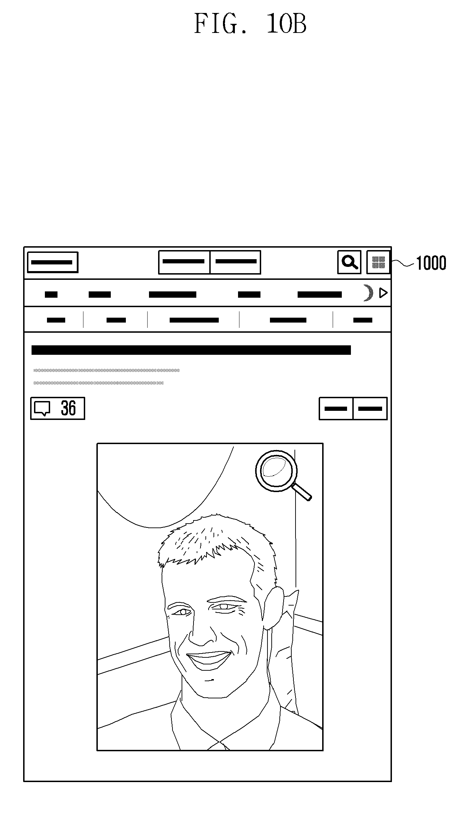

FIGS. 10A and 10B illustrate a method for moving the image according to various embodiments of the present disclosure.

Referring to FIGS. 10A and 10B, FIG. 10A illustrates an image 1000 that is enlarged through an image object 1010. According to an embodiment of the present disclosure, when the user touches any point 1020 in the image object area 1010 and drags the touch, the processor 120 may control the display 150 to display the enlarged image area that has not been displayed in the image object 1010, as shown in FIG. 10B. For example, when a drag-event on a certain point 1030 of FIG. 10A in the direction of an arrow 1040 (e.g., downwards in the image) is received, the processor 120 may control the display 150 to display the image of FIG. 10B according to the drag-direction.

According to an embodiment of the present disclosure, a method for displaying images of an electronic device may comprise displaying an electronic document including an image object, receiving an event with respect to the image object, adjusting, based on the received event, a size of an image displayed through the image object, and displaying the size-adjusted image.

According to an embodiment of the present disclosure, the displaying of the electronic document including the image object further may comprise displaying a specifying object for adjusting the size of the image on the image object.

According to an embodiment of the present disclosure, the adjusting of the size of the image may comprise enlarging or reducing the size of the image based on a central point of the image object.

According to an embodiment of the present disclosure, the receiving of the event with respect to the image object may comprise receiving an event according to a pinch-zoom gesture.

According to an embodiment of the present disclosure, the adjusting of the size of the image may comprise enlarging or reducing the size of the image based on a point where the event is received on the image object.

According to an embodiment of the present disclosure, the receiving of the event with respect to the image object may comprise detecting at least one face in the image displayed through the image object, and receiving an event with respect to at least one area where the face is detected.

According to an embodiment of the present disclosure, the adjusting of the size of the image displayed through the image object may comprise enlarging or reducing the image based on at least one area where the face is detected.

According to an embodiment of the present disclosure, the adjusting of the size of the image displayed through the image object may comprise adjusting the size of the image into the size of an original image or at a certain ratio.

According to an embodiment of the present disclosure, further may comprise identifying whether an event for restoring the size-adjusted image to the original status, in which the size of the image is not adjusted, is received, and restoring, if the event for restoring the image to the original status is received, the size-adjusted image to the original status in which the size of the image is not adjusted.

According to an embodiment of the present disclosure, further may comprise identifying whether an event for moving the image displayed through the image object is received, and moving, if the event for moving the image is received, the image based on the event.

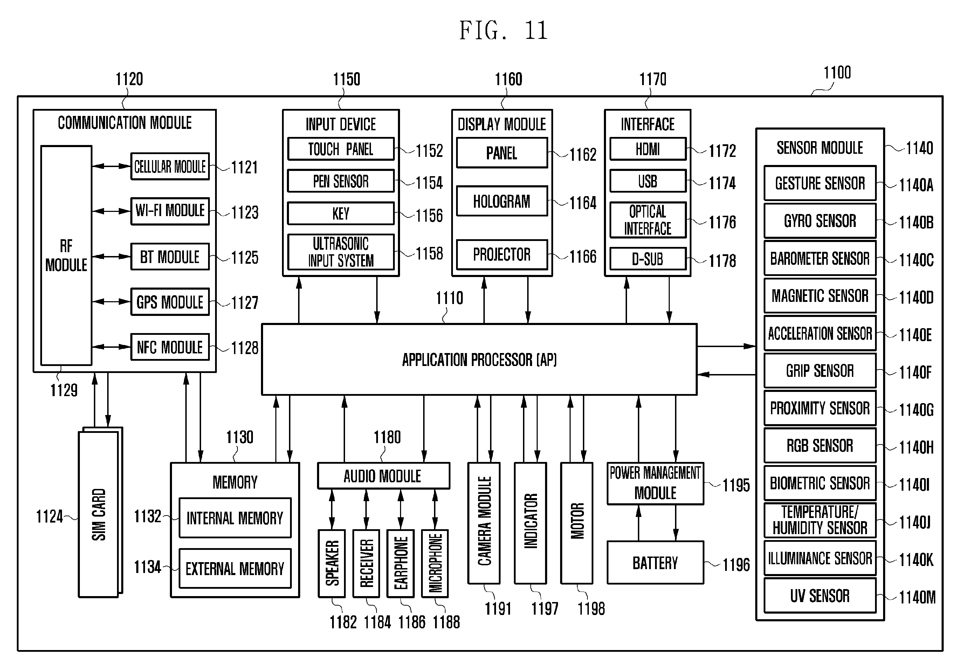

FIG. 11 is a block diagram of an electronic device according to an embodiment of the present disclosure.

Referring to FIG. 11, an electronic device 1100 may form, for example, the whole or part of the electronic device 101 shown in FIG. 1. Electronic device 1100 may include at least one application processor (AP) 1110, a communication module 1120, a subscriber identification module (SIM) card 1124, a memory 1130, a sensor module 1140, an input unit 1150, a display 1160, an interface 1170, an audio module 1180, a camera module 1191, a power management module 1195, a battery 1196, an indicator 1197, and a motor 1198.

The AP 1110 may drive an operating system or applications, control a plurality of hardware or software components connected thereto, and also perform processing and operation for various data including multimedia data. The AP 1110 may be formed of a system-on-chip (SoC), for example. According to an embodiment of the present disclosure, the AP 1110 may further include a graphic processing unit (GPU) (not shown).

The communication module 1120 (e.g., the communication interface 160) may perform data communication with any other electronic device (e.g., the other electronic device 104 or the server 106) connected to the electronic device 200 (e.g., the electronic device 101) through the network. According to an embodiment of the present disclosure, the communication module 1120 may include therein a cellular module 1121, a Wi-Fi module 1123, a BT module 1125, a GPS module 1127, an NFC module 1128, and an RF module 1129.

The cellular module 1121 may support a voice call, a video call, a message service, an internet service, and the like through a communication network (e.g., LTE, LTE-A, CDMA, WCDMA, UMTS, WiBro, or GSM, and the like). Additionally, the cellular module 1121 may perform identification and authentication of the electronic device in the communication network, using the SIM card 1124. According to an embodiment of the present disclosure, the cellular module 221 may perform at least part of functions the AP 1110 can provide. For example, the cellular module 221 may perform at least part of a multimedia control function.

According to an embodiment of the present disclosure, the cellular module 1121 may include a communication processor (CP). Additionally, the cellular module 1121 may be formed of SoC, for example. Although some elements, such as the cellular module 1121 (e.g., the CP), the memory 230, or the power management module 1195 are shown as separate elements being different from the AP 1110 in FIG. 11, the AP 1110 may be formed to have at least part (e.g., the cellular module 1121) of the above elements in an embodiment of the present disclosure.

According to an embodiment of the present disclosure, the AP 1110 or the cellular module 1121 (e.g., the CP) may load commands or data, received from a nonvolatile memory connected thereto or from at least one of the other elements, into a volatile memory to process them. Additionally, the AP 1110 or the cellular module 1121 may store data, received from or created at one or more of the other elements, in the nonvolatile memory.

Each of the Wi-Fi module 1123, the BT module 1125, the GPS module 1127 and the NFC module 1128 may include a processor for processing data transmitted or received therethrough. Although FIG. 11 illustrates the cellular module 1121, the Wi-Fi module 1123, the BT module 1125, the GPS module 1127 and the NFC module 1128 as different blocks, at least part of them may be contained in a single Integrated Circuit (IC) chip or a single IC package in an embodiment of the present disclosure. For example, at least part (e.g., the CP corresponding to the cellular module 1121 and a Wi-Fi processor corresponding to the Wi-Fi module 1123) of respective processors corresponding to the cellular module 1121, the Wi-Fi module 1123, the BT module 1125, the GPS module 1127 and the NFC module 1128 may be formed as a single SoC.

The RF module 1129 may transmit and receive data, e.g., RF signals or any other electric signals. Although not shown, the RF module 1129 may include a transceiver, a Power Amp Module (PAM), a frequency filter, a Low Noise Amplifier (LNA), and the like. In addition, the RF module 1129 may include any component, e.g., a wire or a conductor, for transmission of electromagnetic waves in a free air space. Although FIG. 11 illustrates that the cellular module 1121, the Wi-Fi module 1123, the BT module 1125, the GPS module 1127 and the NFC module 1128 share the RF module 1129, at least one of them may perform transmission and reception of RF signals through a separate RF module in an embodiment of the present disclosure.

The SIM card 1124 may be a specific card formed of SIM and may be inserted into a slot formed at a certain place of the electronic device. The SIM card 1124 may contain therein an Integrated Circuit Card Identifier (ICCID) or an International Mobile Subscriber Identity (IMSI).

The memory 1130 (e.g., the memory 130) may include an internal memory 1132 and an external memory 1134. The internal memory 1132 may include, for example, at least one of a volatile memory (e.g., a Dynamic Random Access Memory (DRAM), a Static RAM (SRAM), a Synchronous DRAM (SDRAM), and the like) or a non-volatile memory (e.g., a One Time Programmable Read Only Memory (OTPROM), a PROM, an Erasable and Programmable ROM (EPROM), an Electrically Erasable and Programmable ROM (EEPROM), a mask ROM, a flash ROM, a NAND flash memory, a NOR flash memory, and the like).

According to an embodiment of the present disclosure, the internal memory 1132 may have the form of a Solid State Drive (SSD). The external memory 1134 may include a flash drive, e.g., Compact Flash (CF), Secure Digital (SD), Micro-SD, Mini-SD, eXtreme Digital (xD), memory stick, and the like. The external memory 1134 may be functionally connected to the electronic device 1100 through various interfaces. According to an embodiment of the present disclosure, the electronic device 1100 may further include a storage device or medium, such as a hard drive.

The sensor module 1140 may measure the physical quantity or detect an operating status of the electronic device 200, and then convert measured or detected information into electric signals. The sensor module 1140 may include, for example, at least one of a gesture sensor 1140A, a gyro sensor 1140B, an atmospheric sensor 1140C, a magnetic sensor 1140D, an acceleration sensor 1140E, a grip sensor 1140F, a proximity sensor 1140G, a color sensor 1140H (e.g., Red, Green, Blue (RGB) sensor), a biometric sensor 1140I, a temperature-humidity sensor 1140J, an illumination sensor 1140K, and an ultraviolet (UV) sensor 1140M. Additionally or alternatively, the sensor module 1140 may include, e.g., an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris scan sensor (not shown), or a finger scan sensor (not shown). In addition, the sensor module 1140 may include a control circuit for controlling one or more sensors equipped therein.

The input unit 1150 may include a touch panel 1152, a digital pen sensor 1154, a key 1156, or an ultrasonic input unit 1158. The touch panel 1152 may recognize a touch input in a manner of capacitive type, resistive type, infrared type, or ultrasonic type. In addition, the touch panel 1152 may further include a control circuit. In case of a capacitive type, a physical contact or proximity may be recognized. The touch panel 1152 may further include a tactile layer. In this case, the touch panel 1152 may offer a tactile feedback to a user.

The digital pen sensor 1154 may be formed in the same or similar manner as receiving a touch input or by using a separate recognition sheet. The key 1156 may include, for example, a physical button, an optical key, or a keypad. The ultrasonic input unit 1158 is a specific device capable of identifying data by detecting sound waves with a microphone 1188 in the electronic device 1100 through an input tool that generates ultrasonic signals, thus allowing wireless recognition. According to an embodiment of the present disclosure, the electronic device 1100 may receive a user input from any external device (e.g., a computer or a server) connected thereto through the communication module 1120.

The display 1160 (e.g., the display 150) may include a panel 1162, a hologram 1164, or a projector 1166. The panel 1162 may be, for example, a Liquid Crystal Display (LCD), an Active Matrix Organic Light Emitting Diode (AM-OLED), and the like. The panel 1162 may have a flexible, transparent or wearable form. The panel 1162 may be formed of a single module with the touch panel 1152. The hologram 1164 may show a stereoscopic image in the air using interference of light. The projector 1166 may project an image onto a screen, which may be located at the inside or outside of the electronic device 1100. According to an embodiment of the present disclosure, the display 1160 may further include a control circuit for controlling the panel 1162, the hologram 1164, and the projector 1166.

The interface 1170 may include, for example, an HDMI 1172, a USB 1174, an optical interface 1176, or a D-sub-miniature (D-sub) 1178. The interface 1170 may be contained, for example, in the communication interface 160 shown in FIG. 1. Additionally or alternatively, the interface 1170 may include, for example, a Mobile High-definition Link (MHL) interface, an SD card/ a Multi-Media Card (MMC) interface, or an Infrared Data Association (IrDA) interface.

The audio module 1180 may perform a conversion between sounds and electric signals. At least part of the audio module 1180 may be contained, for example, in the input/output interface 140 shown in FIG. 1. The audio module 1180 may process sound information inputted or outputted through a speaker 1182, a receiver 1184, an earphone 1186, or a microphone 1188.

The camera module 1191 is a device capable of obtaining still images and moving images. According to an embodiment of the present disclosure, the camera module 1191 may include at least one image sensor (e.g., a front sensor or a rear sensor), a lens (not shown), an Image Signal Processor (ISP, not shown), or a flash (e.g., an LED or xenon lamp, not shown).

The power management module 1195 may manage electric power of the electronic device 1100. Although not shown, the power management module 1195 may include, for example, a Power Management IC (PMIC), a charger IC, or a battery or fuel gauge.

The PMIC may be formed, for example, of an IC chip or SoC. Charging may be performed in a wired or wireless manner. The charger IC may charge a battery 1196 and prevent overvoltage or overcurrent from a charger. According to an embodiment of the present disclosure, the charger IC may have a charger IC used for at least one of wired and wireless charging types. A wireless charging type may include, for example, a magnetic resonance type, a magnetic induction type, or an electromagnetic type. Any additional circuit for a wireless charging may be further used, such as a coil loop, a resonance circuit, a rectifier, and the like.

The battery gauge may measure the residual amount of the battery 1196 and a voltage, current or temperature in a charging process. The battery 1196 may store or create electric power therein and supply electric power to the electronic device 1100. The battery 1196 may be, for example, a rechargeable battery or a solar battery.

The indicator 1197 may show thereon a current status (e.g., a booting status, a message status, a recharging status, and the like) of the electronic device 1100 or one part of the electronic device 1100 (e.g., the AP 1110). The motor 1198 may convert an electric signal into a mechanical vibration. Although not shown, the electronic device 1100 may include a specific processor (e.g., a GPU) for supporting a mobile TV. This processor may process media data that comply with standards of Digital Multimedia Broadcasting (DMB), Digital Video Broadcasting (DVB), or media flow.

Each of the above-discussed elements of the electronic device disclosed herein may be formed of one or more components, and the name of the above-discussed elements of the electronic device may be varied according to the type of the electronic device. The electronic device disclosed herein may be formed of at least one of the above-discussed elements without some elements or with additional other elements. Some of the elements may be integrated into a single entity that still performs the same functions as those of such elements before being integrated.

The term "module" used in embodiments of the present disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of an Application-Specific IC (ASIC) chip, Field-Programmable Gate Arrays (FPGAs), and a programmable-logic device, which have been known or are to be developed.

According to various embodiments of the present disclosure, at least part of a device (e.g., modules or functions thereof) or a method (e.g., operations) according to embodiments of the present disclosure be implemented, for example, by an instruction stored in a computer-readable storage media in the form of a programming module. When the instruction is executed by at least one processor (e.g., the processor 120), the at least one processor may perform a function corresponding to the instruction. The computer readable storage media may be, for example, the memory 130. At least part of the programming module may be implemented (e.g., executed) by, for example, the processor 1110. At least part of the programming module may include, for example, a module, a program, a routine, sets of instructions and/or a process, and the like to perform one or more functions.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

The programming module according to embodiments of the present disclosure may include at least one of the aforementioned elements, or may omit a part of the aforementioned elements, or may further include additional different elements. The operations performed by the programming module according to embodiments of the present disclosure or other elements may be executed by a sequential, a parallel, an iterative, or a heuristics method. In addition, some operations may be executed in a different order, or may be omitted, or may add other operations.

According to various embodiments of the present disclosure, a computer-readable recording medium may record a program to perform a method for displaying images of an electronic device, the method comprising displaying an electronic document including an image object, receiving an event with respect to the image object, adjusting, based on the received event, a size of an image displayed through the image object, and displaying the size-adjusted image.

As described above, the method for displaying an image and the electronic device for implementing the same, according to various embodiments of the present disclosure, can allow the user to simply and easily adjust the size of the image on the screen in which the electronic document is displayed to thereby provide enhanced usability to the user.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for displaying images of an electronic device, the method comprising:
displaying an electronic document including an image object;
receiving an event with respect to the image object;
adjusting, based on the received event, a size of an image displayed through the image object; and
displaying the size-adjusted image.

2. The method of claim 1, wherein the adjusting of the size of the image comprises enlarging or reducing the size of the image based on a point where the event is received on the image object.

3. The method of claim 1, wherein the receiving of the event with respect to the image object comprises:
detecting at least one face in the image displayed through the image object; and
receiving an event with respect to at least one area where the at least one face is detected.

4. The method of claim 3, wherein the adjusting of the size of the image displayed through the image object comprises enlarging or reducing the image based on the at least one area where the at least one face is detected.

5. The method of claim 1, wherein the adjusting of the size of the image displayed through the image object comprises adjusting the size of the image into the size of an original image or at a certain ratio.

6. The method of claim 1, further comprising:
identifying whether an event for restoring the size-adjusted image to the original status, in which the size of the image is not adjusted, is received; and
restoring, if the event for restoring the image to the original status is received, the size-adjusted image to the original status in which the size of the image is not adjusted.

7. The method of claim 1, further comprising:
identifying whether an event for moving the image displayed through the image object is received; and
moving, if the event for moving the image is received, the image based on the event.

8. An electronic device comprising:
a display module configured to display an electronic document including an image object;
a user input module that includes a touch panel configured to create an event with respect to the image object; and
a processor configured:
to control the display module to adjust a size of an image displayed through the image object based on the received event, and
to display the size-adjusted image.

9. The electronic device of claim 8, wherein the processor is further configured to enlarge or reduce the size of the image based on a point where the event is received on the image object.

10. The electronic device of claim 8,
wherein the processor is further configured to detect at least one face in the image displayed through the image object, and
wherein the touch panel is configured to create an event with respect to at least one area where the at least one face is detected.

11. The electronic device of claim 10, wherein the processor is further configured to enlarge or reduce the image based on the at least one area where the at least one face is detected.

12. The electronic device of claim 8, wherein the processor is further configured to adjust the size of the image into the size of an original image or at a certain ratio.

13. The electronic device of claim 8,
wherein the user input module is further configured to receive an event for restoring the size-adjusted image to the original status, in which the size of the image is not adjusted, and
wherein, if the processor identifies that the event for restoring the image to the original status has been received, the processor is further configured to restore the size-adjusted image to the original status, in which the size of the image is not adjusted.

14. The electronic device of claim 8,
wherein the user input module is further configured to receive an event for moving the image displayed through the image object, and
wherein, if the processor identifies that the event for moving the image has been received, the processor is further configured to move the image based on the event.

15. At least one non-transitory computer-readable storage medium for storing a computer program of instructions configured to be readable by at least one processor for instructing the at least one processor to execute a computer process for performing the method of claim 1.
